# EUROPEAN PATENT SPECIFICATION

(11) **EP 2 748 531 B1**
(45) Date of publication and mention of the grant of the patent: **06.12.2017**
(21) Application number: 11871279.3
(22) Date of filing: 22.08.2011
(51) Int. Cl.: F23R 3/00

(54) **Method of injecting combustion reactants into a combustor**
Injektionsverfahren von Verbrennungsedukten in eine Brennkammer
Procédé d'injection de réactants dans une CHAMBRE DE COMBUSTION

(43) Date of publication of application: 02.07.2014
(73) Proprietor: CPS-Holding Limited, Abu Dhabi (AE)
(72) Inventor: Toqan, Majed, Abu Dhabi (AE); Gregory, Brent Allan, Scottsdale, AZ 85259 (US); Regele, Jonathan David, Ames, Iowa 50014 (US); Yamane, Ryan Sadao, Gilbert, AZ 85296 (US)
(74) Representative: Westphal, Mussgnug & Partner Patentanwälte mbB
(86) International application number: PCT/US2011/048581
(87) International publication number: WO 2013/028163

(56) References cited:
- US-A- 4 891 936
- US-A- 4 891 936
- US-A- 4 928 481
- US-A- 5 113 647
- US-A- 5 113 647
- US-A- 5 609 031
- US-B1- 6 955 053
- US-B1- 8 739 511
- US-B1- 9 181 812

## Description

### TECHNICAL FIELD

This invention relates to devices in gas turbine engines that aid in containing and producing the combustion of a fuel and air mixture. Such devices include but are not limited to fuel-air nozzles, combustor liners and casings and flow transition pieces that are used in military and commercial aircraft, power generation, and other gas turbine related applications.

### BACKGROUND ART

Gas turbine engines include machinery that extracts work from combustion gases flowing at very high temperatures, pressures and velocity. The extracted work can be used to drive a generator for power generation or for providing the required thrust for an aircraft. A typical gas turbine engine consists of multistage compressor where the atmospheric air is compressed to high pressures. The compressed air is then mixed at a specified fuel/air ratio in a combustor wherein its temperature is increased. The high temperature and pressure combustion gases are then expanded through a turbine to extract work so as to provide the required thrust or drive a generator depending on the application. The turbine includes at least a single stage with each stage consisting of a row of blades and a row of vanes. The blades are circumferentially distributed on a rotating hub with the height of each blade covering the hot gas flow path. Each stage of non-rotating vanes is placed circumferentially, which also extends across the hot gas flow path. The included invention involves the combustor of gas turbine engines and components that introduce the fuel and air into the said device.

The combustor portion of a gas turbine engine can be of several different types: can/tubular, annular, and a combination of the two forming a can-annular combustor. It is in this component that the compressed fuel-air mixture passes through fuel-air nozzles and a combustion reaction of the mixture takes place, creating a hot gas flow causing it to drop in density and accelerate downstream. The can type combustor typically comprises of individual, circumferentially spaced cans that contain the flame of each nozzle separately. Flow from each can is then directed through a duct and combined in an annular transition piece before it enters the first stage vane. In the annular combustor type, fuel-air nozzles are typically distributed circumferentially and introduce the mixture into a single annular chamber where combustion takes place. Flow simply exits the downstream end of the annulus into the first stage turbine, without the need for a transition piece. The key difference of the last type, a can-annular combustor, is that it has individual cans encompassed by an annular casing that contains the air being fed into each can. Each variation has its benefits and disadvantages, depending on the application. A method of injecting combustion reactants into an annular combustor is disclosed by US6955053 B1. In combustors for gas turbines, it is typical for the fuel-air nozzle to introduce a swirl to the mixture for several reasons. One is to enhance mixing and thus combustion, another reason is that adding swirl stabilizes the flame to prevent flame blow out and it allows for leaner fuel-air mixtures for reduced emissions. A fuel air nozzle can take on different configurations such as single to multiple annular inlets with swirling vanes on each one.

As with other gas turbine components, implementation of cooling methods to prevent melting of the combustor material is needed. A typical method for cooling the combustor is effusion cooling, implemented by surrounding the combustion liner with an additional, offset liner, which between the two, compressor discharge air passes through and enters the hot gas flow path through dilution holes and cooling passages. This technique removes heat from the component as well as forms a thin boundary layer film of cool air between the liner and the combusting gases, preventing heat transfer to the liner. The dilution holes serve two purposes depending on its axial position on the liner: a dilution hole closer to the fuel-air nozzles will aid in the mixing of the gases to enhance combustion as well as provide unburned air for combustion, second, a hole that is placed closer to the turbine will cool the hot gas flow and can be designed to manipulate the combustor outlet temperature profile.
One can see that several methods and technologies can be incorporated into the design of combustors for gas turbine engines to improve combustion and lower emissions. While gas turbines tend to produce less pollution than other power generation methods, there is still room for improvement in this area. With government regulation of emissions tightening in several countries, the technology will need to improve to meet these requirements.

According to an aspect of the invention there is provided a method of injecting reactants according to claim 1.

### DISCLOSURE OF THE INVENTION

With regard to present invention, there is provided a novel and improved combustor design that is capable of operating in a typical fashion while minimizing the pollutant emissions that are a result of combustion of a fuel and air mixture. The invention consists of a method according to claim 1. The original feature of the invention is that the fuel and air inlets are placed in such a way as to create a region of combustion near the front wall. Separating the fuel and air injection nozzles in conjunction with placing the air nozzles downstream of the fuel nozzles enhances the mixing of the combustion reactants and creates a specific oxygen concentration in the combustion region that greatly reduces the production of NOx. In addition, the introduction of compressor discharge air downstream of the combustion region allows for any CO produced during combustion to be burned/consumed before entering the first stage turbine. In effect, the combustor will improve gas turbine emission levels, thus reducing the need for emission control devices as well as minimize the environmental impact of such devices. In addition to this improvement, the tangentially firing fuel and fuel- air nozzles directs any flame fronts to the adjacent burner, greatly enhancing the ignition process of the combustor.

### BRIEF DESCRIPTION OF THE DRAWINGS

Referring to the drawings:
FIG. 1 is a two-dimensional sketch of an example which does not form part of the invention, showing the nozzles that attach to the outer combustor liner and have a circumferential and radial direction into the combustor (possible longitudinal direction of the nozzle not shown);
FIG. 2 is an isometric side view of an annular combustor with the proposed staged fuel and air injection according to the invention;
FIG. 3 is an isometric section view with the cutting plane defined by the engine centerline and a radius;
FIG. 4A is an isometric side view looking forward to aft that shows the front wall and the perforated front wall that the said invention may have;
FIG. 4B is a close up view of the image from FIG. 4A;
FIG. 5A is an isometric front view of the example combustor from an aft to front perspective that shows the outlet and inlet nozzles; and
FIG. 5B is a close up view of the image from FIG. 5A.

### BEST MODES FOR CARRYING OUT THE INVENTION

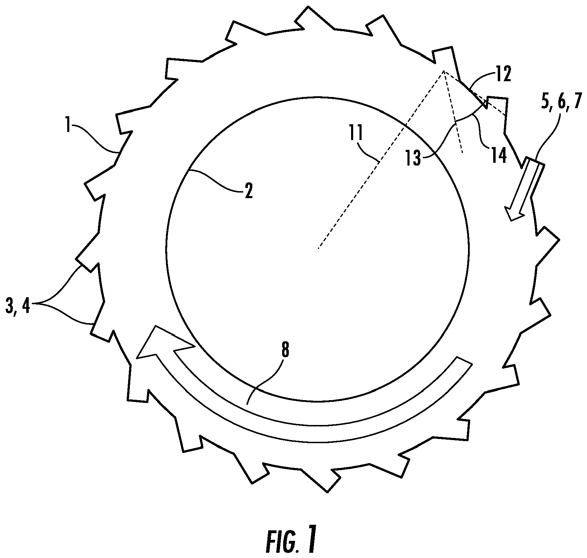

FIG. 1 shows the general premise of an annular combustor with tangentially directed fuel-air nozzles. The combustor is composed of an outer shell (or liner) 1, an inner shell (or liner) 2, both of which can have a constant or varying radius in the longitudinal direction, and a front wall 9 that connects the inner and outer liners 1, 2. As seen in the- Fig. 1 an example configuration shows fuel nozzles 3 and pure air/premixed fuel-air nozzles 4 pointing mainly in a circumferential direction, where the angle 14 is formed between a line 12 tangent to the outer liner and the nozzle 3, 4 centerlines 13, but may have a radial or longitudinal component to its direction. These various nozzles 3, 4 may share a common plane defined the longitudinal direction and a point along the engine centerline and may be equally spaced circumferentially or have pattern to the spacing in this direction. The various types of nozzles may introduce pure fuel 5, pure air (compressor discharge air) 6, or a premixed fuel-air 7 combination into the combustor volume created by the inner and outer shell 1, 2 and the front wall 9. The reactants that are injected by the fuel and air nozzles 3, 4 combust within this region and create a flow field 8 through the combustor that rotates about the engine centerline.

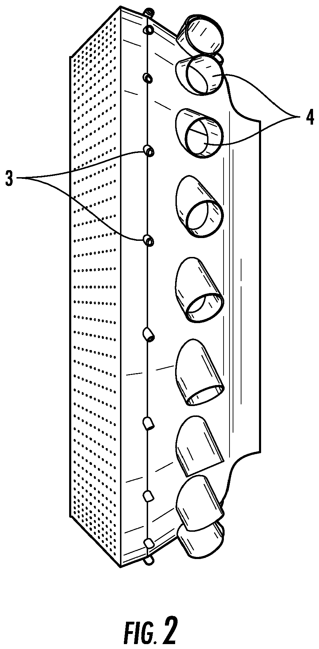

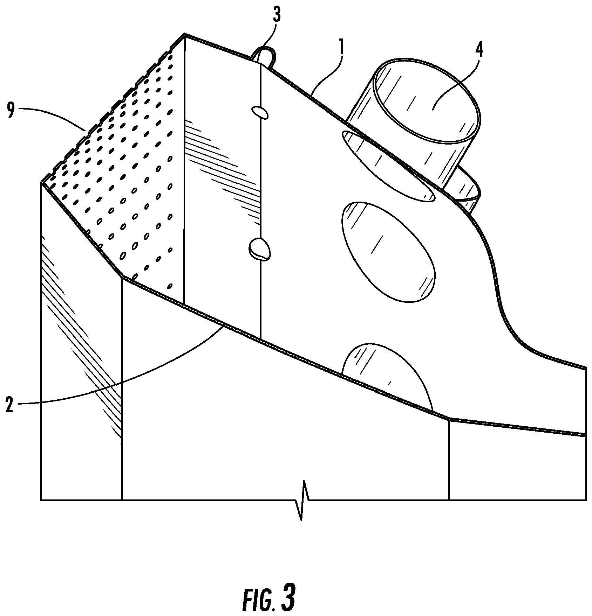

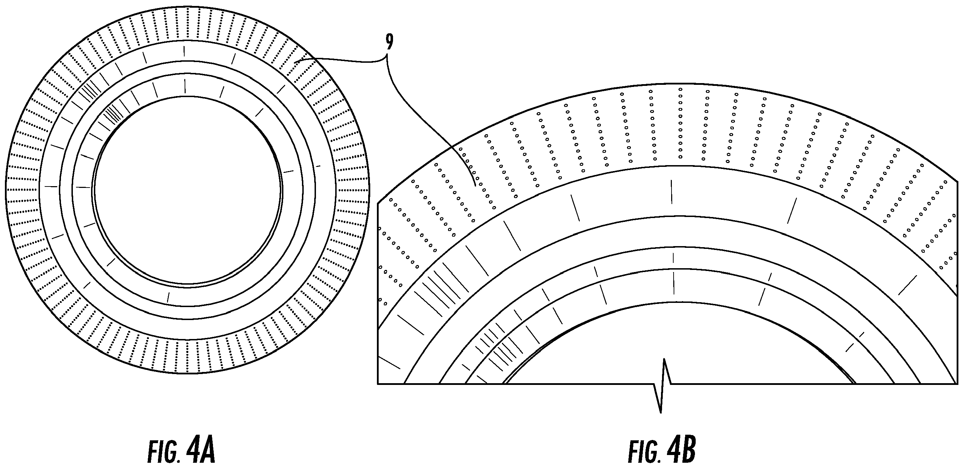

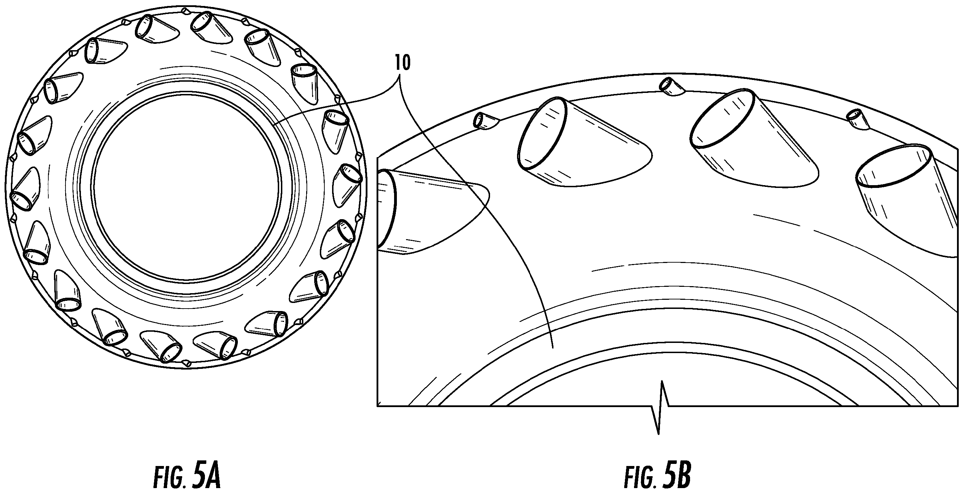

FIG. 2 shows the inventive configuration where fuel nozzles 3 are placed upstream (to the left) of the air/premixed fuel-air nozzles 4. The number of fuel nozzles 3 and air nozzles 4 may be at least one, up to an unlimited amount. Compressor discharge air is also introduced to the combustor volume through a perforated front wall 9 as seen in FIG. 3, 4A and 4B. The injection of fuel near the front wall in conjunction with the compressor discharge air that is injected downstream of the fuel nozzles 3, creates the desired mixing and fuel-air staging effect that will create an optimal combustion environment that reduces NOx and CO emissions from the combustor. More specifically, the most air mixture that is injected through a downstream set of nozzles becomes diluted with flue gases as it travels/diffuses upstream towards the fuel rich combustion region. This diluted oxygen mixture reduces the flame temperature and provides the means in which low emission combustion takes place. The hot combustion products then exit the combustor through an annular opening 10 as seen in FIG. 5A and 5B where it enters the first stage turbine of the gas turbine.

The present invention is described above with reference to a preferred embodiment. However, those skilled in the art will recognize that changes and modifications may be made in the described embodiment without departing from the nature and scope of the present invention. Various changes and modifications to the embodiment herein chosen for purposes of illustration will readily occur to those skilled in the art.

Having fully described the invention in such clear and concise terms as to enable those skilled in the art to understand and practice the same, the invention claimed is:

## Claims

1. A method of injecting combustion reactants into a combustor of a gas turbine engine comprising the steps of:
providing a combustor, the combustor including:
an outer shell (1), an inner shell (2), and a perforated front wall (9) that connects the outer shell (1) to the inner shell (2) so as to form an annular volume arranged about a centerline of the combustor, and an annular discharge opening (10) opposite to the perforated front wall (9) arranged about the centerline of the combustor;
first nozzles (4) in the outer shell (1) between the perforated front wall (9) and the annular discharge opening (10), said first nozzles (4) are circumferentially spaced in a common plane normal to the longitudinal direction; and
second nozzles (3) in the outer shell (1) between the circumferentially spaced first nozzles (4) and the perforated front wall (9), said second nozzles (3) are circumferentially spaced in a common plane normal to the longitudinal direction;
injecting a pre-mixed fuel-air mixture into the annular volume through the circumferentially spaced first nozzles (4) residing in the first plane, the circumferentially spaced first nozzles (4)
injecting the pre-mixed fuel-air mixture into the annular volume in a direction that is angularly offset from a tangent line relative to the outer shell (1) forming a flow field through the annular volume rotating about the centerline of the combustor, the flow field flowing through the annular volume in a direction from the perforated front wall (9) to the annular discharge opening (10);
injecting only fuel into the flow field through the annular volume through the circumferentially spaced second nozzles (3) residing in the second plane, the circumferentially spaced second nozzles (3) injecting the fuel into the annular volume in the direction that is angularly offset from the tangent line relative to the outer shell (1); and
introducing compressor discharge air through the perforated front wall (9) into the flow field through the annular volume;
the steps of injecting a pre-mixed fuel-air mixture into the annular volume through the circumferentially spaced first nozzles (4) residing in the first plane, injecting only fuel into the flow field through the annular volume through the circumferentially spaced second nozzles (3) residing in the second plane, and injecting compressor discharge air through the perforated front wall (9) into the flow field through the annular volume creating fuel-air staging for enhancing combustion and reducing NOx.

## Patentansprüche

1. Verfahren zum Einspritzen von Verbrennungsreaktanten in eine Brennkammer eines Gasturbinenmotors, umfassend die folgenden Schritte:
- Bereitstellen einer Brennkammer, wobei die Brennkammer aufweist:
einen äußeren Mantel (1), einen inneren Mantel (2) und eine perforierte Frontwand (9), welche den äußeren Mantel (1) mit dem inneren Mantel (2) verbindet, um ein ringförmiges Volumen zu bilden, welches um eine Mittelachse der Brennkammer angeordnet ist, und eine ringförmige Auslassöffnung (10), die gegenüberliegend der perforierten Frontwand (9) um die Mittelachse der Brennkammer angeordnet ist,
erste Düsen (4) im äußeren Mantel (1) zwischen dem perforierten äußeren Mantel (1) und der ringförmigen Auslassöffnung (10), wobei die ersten Düsen (4) in Umfangrichtung beabstandet in einer gemeinsamen Ebene angeordnet sind, die normal zur Längsrichtung verläuft,
zweite Düsen (3) im äußeren Mantel (1) zwischen den in Umfangsrichtung beabstandet angeordneten ersten Düsen (4) und der perforierten Frontwand (9), wobei die zweiten Düsen (3) in Umfangrichtung beabstandet in einer gemeinsamen Ebene angeordnet sind, die normal zur Längsrichtung verläuft;
- Einspritzen eines vorgemischten Kraftstoff-Luft-Gemischs in das ringförmige Volumen durch die in Umfangrichtung beabstandet angeordneten ersten Düsen (4), die in der ersten Ebene angeordnet sind,
- wobei die in Umfangsrichtung beabstandet angeordneten ersten Düsen (4) das vorgemischte Kraftstoff-LuftGemisch in das ringförmige Volumen in einer Richtung einspritzen, die winklig versetzt von einer Tangente in Bezug auf den äußeren Mantel (1) verläuft, wodurch ein Strömungsfeld durch das ringförmige Volumen gebildet wird, welches um die Mittelachse der Brennkammer rotiert und das Strömungsfeld durch das ringförmige Volumen entlang einer Richtung von der perforierten Frontwand (9) zur Auslassöffnung (10) strömt;
- Einspritzen nur von Kraftstoff in das Strömungsfeld durch das ringförmige Volumen durch die in Umfangsrichtung versetzt angeordneten zweiten Düsen (3), die in der zweiten Ebene angeordnet sind,
- wobei die in Umfangsrichtung beabstandet angeordneten zweiten Düsen (3) den Kraftstoff in das ringförmige Volumen in einer Richtung einspritzen, die winklig versetzt von einer Tangente in Bezug auf den äußeren Mantel (1) verläuft; und
- Einspritzen von verdichteter Luft durch die perforierte Frontwand (9) in das Strömungsfeld durch das ringförmige Volumen; wobei
- die Schritte des Einspritzens eines vorgemischten Kraftstoff-Luft-Gemischs in das ringförmige Volumen durch die in Umfangrichtung beabstandet angeordneten ersten Düsen (4), die in der ersten Ebene angeordnet sind, des Einspritzens nur von Kraftstoff in das Strömungsfeld durch das ringförmige Volumen durch die in Umfangrichtung beabstandet angeordneten zweiten Düsen (3), die in der zweiten Ebene angeordnet sind, und des Einspritzens von verdichteter Luft durch die perforierte Frontwand (9) in das Strömungsfeld durch das ringförmige Volumen eine Kraftstoff-Luft-Stufung zum Verbessern der Verbrennung und zum Reduzieren von NOx erzeugen.

## Revendications

1. Procédé d'injection de réactif de combustion dans une chambre de combustion d'un moteur de turbine à gaz, comprenant des étapes consistant à :
- se procurer une chambre de combustion, cette chambre de combustion comprenant :
une enveloppe externe (1), une enveloppe interne (2) et une paroi frontale perforée (9) qui relie l'enveloppe externe (1) à l'enveloppe externe (2) de façon à définir un volume annulaire situé autour de l'axe médian de la chambre de combustion, et une ouverture d'évacuation annulaire (10) opposée à la paroi frontale perforée (9) et située autour de l'axe médian de la chambre de combustion,
des premiers injecteurs (4) situés dans l'enveloppe externe (1) entre la paroi frontale perforée (9) et l'ouverture d'évacuation annulaire (10), ces premiers injecteurs étant situés à distance périphérique dans un plan commun perpendiculaire à la direction longitudinale, et
des seconds injecteurs (3) situés dans l'enveloppe externe (1) entre les premiers injecteurs (4) situés à distance périphérique et la paroi frontale perforée (9), ces seconds injecteurs étant situés à distance périphérique dans un plan commun perpendiculaire à la direction longitudinale,
- injecter un prémélange carburant-air dans le volume annulaire par les premiers injecteurs (4) situés à distance périphérique dans le premier plan, les premiers injecteurs (4) situés à distance périphérique injectant le prémélange carburant-air dans le volume annulaire dans une direction décalée angulairement par rapport à la tangente de l'enveloppe externe (1), formant au travers du volume annulaire un champ de circulation tournant autour de l'axe médian de la chambre de combustion, ce champ de circulation circulant dans le volume annulaire dans une direction allant de la paroi frontale perforée (9) à l'ouverture d'évacuation annulaire (10),
- injecter uniquement du carburant dans le champ de circulation au travers du volume annulaire par les seconds injecteurs (3) situés à distance périphérique dans le second plan, les seconds injecteurs (3) situés à distance périphérique injectant le carburant dans le volume annulaire selon une direction décalée angulairement par rapport à la tangente de l'enveloppe externe (1), et
introduire de l'air d'évacuation de la chambre de combustion au travers de la paroi frontale perforée (9) dans le champ de circulation au travers du volume annulaire,
les étapes consistant à injecter un prémélange carburant-air au travers du volume annulaire par les premiers injecteurs (4) situés à distance périphérique dans le premier plan, à injecter uniquement du carburant dans le champ de circulation au travers du volume annulaire par les seconds injecteurs (3) situés à distance périphérique dans le second plan et à injecter de l'air d'évacuation de la chambre de combustion par la paroi frontale perforée (9) dans le champ de circulation au travers du volume annulaire créant une séparation d'étapes carburant-air permettant de renforcer la combustion et de réduire les NOx.
